Europäisches Patentamt

(19) European Patent Office

Office européen des brevets

(11) Numéro de publication: **0 187 575**
**B1**

(12) **FASCICULE DE BREVET EUROPÉEN**

(45) Date de publication du fascicule du brevet:
07.02.90

(51) Int. Cl. ⁵: **A 23 C 9/13**

(21) Numéro de dépôt: **85402407.2**

(22) Date de dépôt: **04.12.85**

(54) Procédé de fabrication d'un produit lacté fermenté à faible teneur en lipides et à faible valeur énergétique à usage de sauce de type mayonnaise ou de base pour sauce.

(30) Priorité: **05.12.84 FR 8418517**

(43) Date de publication de la demande:
**16.07.86 Bulletin 86/29**

(45) Mention de la délivrance du brevet:
**07.02.90 Bulletin 90/06**

(84) Etats contractants désignés:
**AT BE CH DE FR GB IT LI LU NL SE**

(56) Documents cité:
**EP-A-0 049 927**
**GB-A-2 107 567**
**US-A-3 025 165**

(73) Titulaire: **COOPERATIVE LAITIERE CENTRALE DE PARIS**
**103 rue Mollére**
**F-94203 Ivry S/Seine (FR)**

(72) Inventeur: **Mouniqua, Arlette Hélène**
**Résidence Talma 8 rue du Maréchal Ney**
**F-91800 Brunoy (FR)**

(74) Mandataire: **Lepeudry-Gautherat, Thérèse**
**ARMENGAUD JEUNE CABINET LEPEUDRY 6, rue du Faubourg Saint Honoré**
**F-75008 Paris (FR)**

LIBERGRAF, STOCKHOLM 1990

**Description**

La présente invention concerne un procédé de fabrication d'un produit lacté fermenté à faible teneur en lipides et à faible valeur énergétique, à usage de sauce de type mayonnaise ou de base pour sauce, froide ou chaude.

Dans la plupart des sauces industrielles ou préparées en restauration collective, on réalise tout d'abord une mayonnaise à laquelle on ajoute différents ingrédients afin d'obtenir le type de sauce souhaité.

La mayonnaise qui contient au moins 80 % en poids de matière grasse d'origine végétale, est donc très riche en lipides et a une valeur énergétique relativement élevée: de l'ordre de 30 000 à 35 000 kJ/kg.

Les diététiciens, ainsi que d'ailleurs le corps médical dans son ensemble, conseillent de plus en plus de réduire la ration lipidique ainsi que l'apport énergétique en particulier chez les sujets prédisposés aux troubles cardiaques ou circulatoires.

Aussi un objet de la présente invention est-il un procédé de fabrication d'un produit lacté hypolipidique et à faible valeur énergétique qui permet de constituer une base pour différents types de sauces, qui peuvent être consommées froides ou chaudes.

Des sauces diététiques dérivées de lait fermenté ont déjà été décrites mais leur contenu et leur procédé de fabrication se distinguent de ceux de la présente invention, chacun des procédés étant particulièrement adapté aux constituants de la sauce, qui ne sont pas les mêmes. Plus particulièrement, l'ordre et la durée des étapes de chauffage, d'homogénéisation, de refroidissement et de mélange des constituants sont très différents et spécifiquement adaptés aux constituants choisis.

Par exemple, la demande de brevet EP-A-0 049 927 décrit plusieurs procédés de préparation de sauce de type mayonnaise, dérivée de yoghourt thermisé et additionné de divers ingrédients.

- Dans tous les exemples, le matériau de départ est un lait enrichi en matière grasse naturelle du lait, jusqu'à un taux de 8 % en poids.
- Dans les exemples III, IV et V, en fonction des additifs, on obtient un produit final qui contient de 26,6 à 39,9 % de matières grasses.
- Dans les exemples I et II, on obtient un produit final qui contient 7,7 % et 9,8 % de matières grasses, dans le premier cas, sans addition d'huile végétale, dans le second, par addition de 5 % d'huile de tournesol.
- Dans les deux exemples, le mélange est additionné de 5 % de sucre et de 1,2 % de poudre de jaune d'oeuf.
- L'apport de calories du produit obtenu est donc encore considérable et sa valeur diététique est limitée.

D'autre part, dans la demande de brevet GB-A-2 107 567 on trouve, dans l'exemple 11, une préparation de crème à étaler, à base de yoghourt dérivé de lait écrémé et d'émulsifiant mais celle-ci a une valeur nutritive très importante due à l'addition de levure, de glucose (15 %) et d'huile de noix de coco (12 %).

D'autres produits diététiques à base de yoghourt sont décrits mais ils ne peuvent pas être considérés comme des bases de sauce. Par exemple, le brevet US-3 025 165 décrit un procédé de préparation d'un yoghourt diététique à base de lait écrémé additionné de graisse végétale. Selon ce procédé, le lait et la matière grasse sont homogénéisés pour former une émulsion; celle-ci est ensuite pasteurisée puis mise à fermenter par L. bulgaricus.

La consistance du produit final obtenu est donc due à la fermentation par L. bulgaricus dont on connaît bien, dans l'industrie laitière, l'effet texturant, dû entre autres à l'action de ses protéases sur les protéines du lait et, surtout, à la sécrétion de polysaccharides.

Le produit obtenu est un yoghourt et contient des bactéries vivantes. On ne peut donc pas en attendre des propriétés de stabilité permettant une conservation durable ni une exposition prolongée à l'air ou à la chaleur, qui seraient nécessaires pour en faire une base de sauce.

La Demanderesse a donc mis au point un procédé de préparation original d'un produit lacté à faible valeur énergétique et pouvant servir de sauce ou de base pour sauce, comprenant au moins 93 % en poids de lait fermenté et au plus 7 % d'autres ingrédients et dont la teneur en matière grasse est inférieure à 7 % et comprend de préférence au maximum 3 % de matière grasse d'origine végétale. Il faut remarquer qu'il n'est pas du tout évident de réaliser un produit ayant la texture, la viscosité et l'onctuosité d'une sauce de type mayonnaise avec des constituants qui comportent aussi peu de matières grasses.

La présente invention concerne donc un procédé pour fabriquer un tel produit, qui comprend les étapes suivantes:

a) pasteurisation du lait;
b) ensemencement du lait pasteurisé avec un ferment lactique thermophile et fermentation jusqu'à obtenir un pH inférieur à 4,5;
c) incorporation d'ingrédients dans le lait fermenté obtenu à l'issue de l'étape b);
d) chauffage progressif du mélange obtenu à l'étape c) jusqu'à une température inférieure à 100°C.

De préférence, l'étape de pasteurisation comprend un chambrage de 20 à 30 minutes.

Avantageusement, l'ensemencement du lait a lieu à une température voisine de 45°C.

Quant au ferment lactique thermophile, il est choisi dans le groupe comprenant notamment Lactobacillus bulgaricus et Lactobacillus helveticus.

De préférence, le pH à la fin de l'étape b) est compris entre 4 et 4,5.

Avantageusement, les ingrédients incorporés à l'étape c) comprennent de la matière grasse d'origine végétale telle que l'huile d'arachide, de mais ou de soja, dans une proportion telle qu'elle constitue au plus 3 % en poids du produit final, ainsi qu'un agent de texturation tel que l'amidon modifié additionné de stabilisant, dans une proportion telle qu'il constitue au plus 3 % en poids du produit final.

Ces ingrédients peuvent également comporter des assaisonnements, le choix de ces derniers devant prendre en compte la température lors du traitement ultérieur.

De préférence, le chauffage de l'étape d) est réalisé sous agitation réduite et pendant une durée comprise entre 90 et 120 minutes.

Avantageusement, la température finale de ce chauffage est de 90°C.

De préférence, ce procédé comporte également les étapes suivantes:

e) lissage du produit issu de l'étape d);
f) conditionnement du produit issu de l'étape e);
g) stérilisation du produit conditionné.

Il est particulièrement avantageux de remplacer les deux étapes f) et g) ci-dessus par une seule de conditionnement à une température supérieure à 90°C et de préférence comprise entre 90 et 95°C.

Le produit obtenu peut être conservé pendant un an à température ambiante. En cours d'utilisation, il peut être exposé à l'air pendant un temps prolongé sans changer d'aspect en surface. La stabilité de sa texture permet également de l'utiliser à chaud.

Par comparaison avec d'autres préparations du même type, le produit obtenu par le procédé de la présente invention a une valeur diététique exceptionnelle par sa faible teneur en lipides, par l'absence de sucre et surtout par l'absence de jaune d'oeuf.

L'exemple suivant qui ne présente aucun caractère limitatif permettra de mieux comprendre comment la présente invention peut être réalisée et quels en sont les principaux avantages.

## Exemple

Selon le procédé de la présente invention, pour préparer un produit lacté à faible teneur en lipides et à faible valeur énergétique, on pasteurise un lait entier. Cette pasteurisation (étape a)) est réalisée à une température généralement comprise entre 90°C et 95°C et est suivie d'un chambrage pendant 20 à 30 minutes.

Puis le lait pasteurisé est refroidi jusqu'à une température voisine de 45°C avant d'être ensemencé avec un ferment lactique thermophile tel que Lactobacillus bulgaricus ou Lactobacillus helveticus. Le taux d'ensemencement est par exemple de 4 %. La fermentation de cette étape b) est arrêtée lorsque le pH est inférieur à 4,5 et est même compris entre 4 et 4,5, le pH idéal étant 4,2.

A l'issue de l'étape b), on incorpore dans le lait ainsi fermenté, sous forte agitation, les ingrédients constituant la formulation du produit final. La proportion de ces ingrédients n'excède pas 7 % en poids. Dans le tableau 1 ci-après, est donnée à titre d'exemple une composition de ces ingrédients.

## Tableau I

| Ingrédients | % en poids par rapport au produit final |
|---|---|
| Amidon modifié | 2 |
| Huile | 2 |
| Sel | 0,3 |
| Stabilisants (carragheenanes et gommes) | 0,34 |
| Sucre (saccharose) | 0,1 |
| Poivre moulu | 0,1 |
| Arômes et aromates | 0,2 |
| Colorant végétal | 0,2 |
| Total | 5,24 |

Le mélange obtenu à l'issue de cette étape c) est chauffé très progressivement pour éviter toute coagulation et sous agitation réduite jusqu'à une température inférieure à 100°C, de préférence jusqu'à 90°C. La montée en température est comprise entre 90 et 120 minutes.

A l'issue de cette étape d), le produit épaissi passe dans une lisseuse puis est conditionné à une température comprise entre 90 et 95°C, dans des conditions connues de l'homme du métier.

Dans le tableau II ci-après, sont indiquées les compositions et valeurs énergétiques d'un produit selon la présente invention et d'une mayonnaise de type industriel.

**Tableau II**

|  | Mayonnaise | Produit de l'invention |
|---|---|---|
| Lipides | 80 à 90 % | 5 à 5,5 % |
| Protides | 1 à 1,5 % | 2,5 à 3 % |
| Glucides | 1,5 à 2 % | 5 à 6 % |
| Sel (NaCl) | 1 à 1,2 % | 0,3 à 0,32 % |
| Valeur énergétique pour 1 kg | 30.500 à 34.440 kJ | 3.090 à 3.550 kJ |

D'après ce tableau, il apparaît que le produit lacté selon la présente invention comporte moins de 7 % de lipides: en fait ceux-ci proviennent pour près de la moitié de la matière grasse butyrique du lait (3 % en poids).

Ce produit apporte en moyenne 3 fois plus de protides et est 4 fois moins salé que la mayonnaise de type industriel: ce faible apport de sel confère notamment à ce produit des qualités diététiques très appréciables.

Quant à sa valeur énergétique, elle est d'environ 10 fois inférieure à celle d'une mayonnaise.

Contrairement à cette dernière, ce produit ne se déstabilise pas à la chaleur et ne subit aucun changement de texture lors d'un passage au four à micro-ondes.

En outre, il présente l'avantage de ne pas former de croûte au contact de l'air. Il est donc possible de disposer ce produit sur une viande ou un poisson dans une vitrine réfrigérée plusieurs heures avant la consommation de ces aliments.

Selon le type et la quantité des assaisonnements ajoutés lors de la préparation du produit, celui-ci a suffisamment de goût pour constituer une sauce d'assaisonnement de type mayonnaise ou il est fade et peut constituer une bonne base pour réaliser différents types de sauce. On lui incorpore alors, à froid ou à chaud, d'autres ingrédients tels que épices, aromates, citron, vinaigre, moutarde, fines herbes, extraits de légumes, champignons, fromages, poisson fumé, charcuterie, beurre, crème fraîche ou alcool.

**Revendications**

1. Procédé de fabrication d'un produit lacté fermenté à faible teneur en lipides et à faible valeur énergétique, à usage de sauce de type mayonnaise ou de base pour sauce, froide ou chaude, comprenant au moins 93 % en poids de lait fermenté et au plus 7 % en poids d'ingrédients comportant une matière grasse d'origine végétale, de teneur en matière grasse inférieure à 7 % et de teneur en matière grasse d'origine végétale inférieure à 3 %, caractérisé en ce qu'il comprend les étapes suivantes:

a) pasteurisation du lait;
b) ensemencement du lait pasteurisé avec un ferment lactique thermophile et fermentation jusqu'à obtenir un pH compris entre 4 et 4,5;
c) incorporation d'ingrédients comportant une matière grasse d'origine végétale dans le lait fermenté issu de l'étape b);
d) chauffage progressif du mélange obtenu à l'issue de l'étape c) jusqu'à une température inférieure à 100°C.

2. Procédé selon la revendication 1, caractérisé en ce que ladite matière grasse végétale est une huile végétale.

3. Procédé selon l'une quelconque des revendications 1 et 2, caractérisé en ce que le produit final comprend au plus 3 % en poids d'un agent de texturation.

4. Procédé selon la revendication 3, caractérisé en ce que ledit agent de texturation est de l'amidon modifié additionné de stabilisant.

5. Procédé selon l'une quelconque des revendications 1 à 4, caractérisé en ce que l'étape a) de pasteurisation comprend un chambrage de 20 à 30 minutes.

6. Procédé selon l'une quelconque des revendications 1 à 5, caractérisé en ce que l'ensemencement a lieu à une température voisine de 45°C.

7. Procédé selon l'une quelconque des revendications 1 à 6, caractérisé en ce que ledit ferment lactique thermophile est choisi dans le groupe comprenant notamment Lactobacillus bulgaricus et Lactobacillus helveticus.

8. Procédé selon l'une quelconque des revendications 1 à 7, caractérisé en ce que le chauffage de ladite étape d) est réalisé sous agitation réduite et pendant une durée comprise entre 90 et 120 minutes.

9. Procédé selon la revendication 8, caractérisé en ce que la température finale dudit chauffage est de 90°C.

10. Procédé selon l'une quelconque des revendications 1 à 9, caractérisé en ce qu'il comprend en outre les étapes suivantes:

e) lissage du produit issu de l'étape d);
f) conditionnement du produit issu de l'étape e) à une température comprise entre 90 et 95°C.

**Patentansprüche**

1. Herstellung eines fett- und kalorienarmen fermentierten Milchprodukts zur Verwendung als Soße des Typs einer Mayonnaise oder einer Soßengrundlage, kalt oder warm, enthaltend mindestens 93 Gew.-% fermentierte Milch und höchstens 7 Gew.-% an Bestandteilen, die ein Pflanzenfett aufweisen, wobei der Gehalt an Fett unter 7 % und der Gehalt an Pflanzenfett unter 3 % liegt, gekennzeichnet, durch die folgenden Stufen:

a) Pasteurisieren von Milch;
b) Beimpfen der pasteurisierten Milch mit einem thermophilen Milchbakterie und Fermentieren bis zum Erreichen eines pH-Werts zwischen 4 und 4,5,
c) Einbringen von Bestandteilen, die ein Pflanzenfett aufweisen, in die aus der Stufe b. erhaltene fermentierte Milch;
d) fortschreitendes Erhitzen des aus der Stufe c) erhaltenen Gemisches bis zu einer Temperatur unterhalb 100°C.

2. Verfahren nach Anspruch 1, dadurch gekennzeichnet, daß das genannte Pflanzenfett ein Pflanzenöl ist.

3. Verfahren nach einem der Ansprüche 1 oder 2, dadurch gekennzeichnet, daß das Endprodukt höchstens 3 Gew.-% eines Texturmittels enthält.

4. Verfahren nach Anspruch 3, dadurch gekennzeichnet, daß das genannte Texturmittel eine modifizierte Stärke ist, der ein Stabilisator zugesetzt wurde.

5. Verfahren nach einem der Ansprüche 1 bis 4, dadurch gekennzeichnet, daß die Stufe a) des Pasteurisierens eine Aufbewahrung bei Raumtemperatur während 20 bis 30 min umfaßt.

6. Verfahren nach einem der Ansprüche 1 bis 5, dadurch gekennzeichnet, daß das Beimpfen bei einer Temperatur im Bereich von 45°C stattfindet.

7. Verfahren nach einem der Ansprüche 1 bis 6, dadurch gekennzeichnet, daß das genannte thermophile Milchbakterie aus Lactobacillus bulgaricus und Lactobacillus helveticus ausgewählt wird.

8. Verfahren nach einem der Ansprüche 1 bis 7, dadurch gekennzeichnet, daß das Erhitzen der genannten Stufe d) unter leichtem Rühren und während einer Dauer von 90 bis 120 min durchgeführt wird.

9. Verfahren nach Anspruch 8, dadurch gekennzeichnet, daß die Endtemperatur des genannten Erhitzens 90°C beträgt.

10. Verfahren nach einem der Ansprüche 1 bis 9, dadurch gekennzeichnet, daß es eine weitere der folgenden Stufen umfaßt:

e) Glätten des aus der Stufe d) erhaltenen Produkts;
f) Konditionieren des aus der Stufe e) erhaltenen Produkts bei einer Temperatur zwischen 90 und 95°C.

**Claims**

1. Process for manufacturing a fermented milk product with a low lipid content and a low energy value, for use as a mayonnaise-type sauce or as a sauce base, cold or hot, containing at least 93 % by weight of fermented milk and at most 7 % by weight of ingredients composed of a fatty substance of vegetable origin, with a fatty substance content of less than 7 % and a fatty substance content of vegetable origin of less than 3 %, characterised in that it comprises the following steps:

a) pasteurising the milk;
b) inoculating the pasteurised milk with a thermophilic lactic ferment and fermenting until a pH of between 4 and 4.5 is obtained;
c) incorporating ingredients comprising a fatty substance of vegetable origin in the fermented milk resulting from step b);
d) progressive heating of the mixture obtained from step c) to a temperature below 100°C.

5

2. Process as claimed in claim 1, characterised in that said vegetable fatty substance is a vegetable oil.

3. Process as claimed in either one of claims 1 and 2, characterised in that the final product comprises at most 3 % by weight of a texturing agent.

4. Process as claimed in claim 3, characterised in that said texturing agent is modified starch with stabiliser added.

5. Process as claimed in any one of claims 1 to 4, characterised in that step a) of pasteurising includes a period of 20 to 30 minutes at room temperature.

6. Process as claimed in any one of claims 1 to 5, characterised in that inoculation takes place at a temperature of around 45°C.

7. Process as claimed in any one of claims 1 to 6, characterised in that said thermophilic lactic ferment is chosen from the group comprising in particular Lactobacillus bulgaricus and Lactobacillus helveticus.

8. Process as claimed in any one of claims 1 to 7, characterised in that the heating of said step d) is carried out under moderate agitation and for a period of between 90 and 120 minutes.

9. Process as claimed in claim 8, characterised in that the final temperature of said heating is 90°C.

10. Process as claimed in any one of claims 1 to 9, characterised in that it includes in addition the following steps:

e) smoothing of the product resulting from step d);
f) conditioning of the product resulting from step e) at a temperature of between 90° and 95°C.